# EUROPEAN PATENT SPECIFICATION

(11) **EP 2 058 448 B1**
(45) Date of publication and mention of the grant of the patent: **27.01.2016**
(21) Application number: 08019592.8
(22) Date of filing: 10.11.2008
(51) Int. Cl.: E04B 1/49, F16B 13/00, E04B 5/23, E04B 1/48

(54) **Tubular connector for connecting mixed wood-concrete beams**
Röhrenförmiger Verbinder zum Verbinden von gemischten Holz-Beton-Balken
Connecteur tubulaire pour connecter des poutres en béton de bois

(30) Priority: 12.11.2007 IT TO20070802
(43) Date of publication of application: 13.05.2009
(73) Proprietor: Università degli studi di Bergamo, 24129 Bergamo (IT)
(72) Inventor: Plizzari, Giovanni, 24129 Bergamo (IT); Maccarini, Giancarlo, 24129 Bergamo (IT); Marini, Alessandra, 24044 Dalmine (BG) (IT)
(74) Representative: Garavelli, Paolo

(56) References cited:
- EP-A1- 0 280 228
- EP-A2- 0 939 175
- DE-A1- 2 945 663
- FR-A1- 2 673 963
- US-A- 4 350 464

## Description

The present invention relates to a tubular connector used to obtain composite wood-concrete structures.

The increased interest for the conservative restoration of historical buildings has posed the problem of consolidating wooden floors, in order to guarantee a greater carrying capacity and a better stiffness against the loads and overloads currently required by building standards.

The use of composite structures have made the demand for wooden floors increase also for new constructions. The renewed interest for this structural typology is motivated by aesthetic (the intrados wooden finishing is particularly appreciated), static and economic reasons.

Some of the most important problems related to the use of wooden floors are the excessive deformability in service condition and the poor acoustic insulation. Consolidation of wooden floors can be performed by casting a concrete slab suitably reinforced and constrained to the wooden beams in order to obtained a composite wood-concrete section. Such solution allows increasing floor stiffness and resistance, provides better acoustic insulation and has the advantage of being a simple technology.

The prior art to which the invention pertains can be found in: DEVICES FOR FASTENING OR SECURING CONSTRUCTIONAL ELEMENTS OR MACHINE PARTS TOGETHER, e.g. NAILS, BOLTS, CIRCLIPS, CLAMPS, CLIPS, WEDGES; JOINTS OR JOINTING (F16B). In fact, the following are known:
- steel studs made with a smooth rebar, inserted in calibrated holes drilled in the wooden beam;
- studs made with either smooth or ribbed rebar, placed into holes having small clearances and secured to the wood by means of epoxy resin;
- dry connectors made with connection devices usually employed in wooden structures such as nail, screw and log bolt type;
- nailed plates - gang nails;
- large diameter tubular elements placed into milled recesses;
- stud connectors and timber dogs;
- thin steel trusses placed into grooves carved in the wooden beam and secured to the beam through epoxy resin, or portion of steel elements connected to the wood with screws;
- connections made with the concrete itself that penetrates into holes milled in the wood.

One fundamental problem in designing the connection between wooden beam and reinforced concrete slab is the need of obtaining the necessary stiffness of the composite beam, which strongly depends on the connection deformability and carrying capacity.

The cooperation between concrete slab and wooden beam is obtained through suitable connections, which must transfer the shear flow between the connected elements (made of concrete and wood). Given the small bearing strength of the wood, in order to guarantee the shear flow transfer along the wood-concrete interface, a high number of connectors is usually necessary.

The dry positioning of traditional stud-connectors requires the adoption of connectors obtained by cutting smooth rebars and by removing irregularities. Smooth connectors are inserted into calibrated holes drilled in the wooden beam. The need of inserting a high number of connectors results in a significant increase of preparation time for both the holes in the wooden beam, and the connector set in place through hammering.

The use of traditional large-diameter tubular connectors, limiting the bearing stress on wood, allows to transfer high shear forces and thereby reduce the number of necessary connections to guarantee an efficient cooperation between the reinforced concrete slab and the wooden beam.

On the contrary, assembling of traditional large-diameter tubular connectors implies some major difficulties: in fact, the connector is inserted inside an annular groove, previously obtained in the beam with a cup-type milling machine, whose thickness is greater than the thickness of the tubular connector to allow both to remove the milled material during the drilling operation, and to withdraw the tool from the ring-type seat at the end of drilling. Fastening the connector to the wooden beam, necessary to avoid free displacements due to the hole-connector clearance, is normally guaranteed by means of resin sealing; the sealing material, when traditional tubular connectors are used, becomes a necessary component to guarantee the shear flow transfer and thus the cooperation between the assembled structural elements.

A further critical aspect following the adoption of traditional tubular connectors is given by the reduced milling depth that can be reached by using hole saw, characterized by a diameter that is approximately equal to the height, much lower than the height that can be reached with full cylindrical drill bits.

As a consequence of the illustrated problems, the use of a traditional big-diameter tubular connection implies some major application difficulties, starting from the delicate procedures for preparing the connector-groove, till sealing the tolerances between connector and hole by means of resin. The connector size and the consequent mechanical performance are further conditioned by the maximum depth that can be reached through the hole saw available on the market.

EP-A1-0280228, FR-A1-2673963 and EP-A2-0939175 disclose connectors according to the preamble of Claim 1.

In this scenario, a new type of connector and an easier installation system are needed. In order to meet the construction site needs, main goals of the new connector and the installation system are the reduction of execution times and laying costs.

The functional need is given by:
The functional need is given by:
   - good performances in terms of stiffness and carrying capacity, on one hand;
   - constructive and executive easiness, on the other hand.

The solution is given by a new tubular connector, directly inserted in the wood without any pre-hole, guaranteeing the necessary cooperation between the different structural elements, without the contribution of a sealant at the hole-connector interface.

In this respect, a tubular connector that can be easily inserted in a wooden beam lacking a pre-hole is proposed.

Moreover, an ideal solution must necessarily be independent of the depth limit imposed by the use of hole saw tools; and it must overcome the problem of withdrawing the milling tools from the wood upon completion of the milling process.

Object of the present document is describing a connection between a wooden structural element and a concrete slab. The connection is obtained by means of a steel tubular connector, delimited at its base by a suitable cutting toothed crown and on the head by a suitable fastening slot to fix the connector to the spindle of an electrical screw driver or a drill. The tubular connector size must be such as to guarantee the shear flow transfer at the wood-concrete interface of the composite section.

The above and other objects and advantages of the invention, as will appear from the following description, are obtained with a tubular connector like the one described in claim 1. Preferred embodiments and non-trivial variations of the present invention are the subject matter of the dependent claim.

The invention will be better described in detail, in a preferred and non-limiting embodiment thereof, with reference to the enclosed figures:

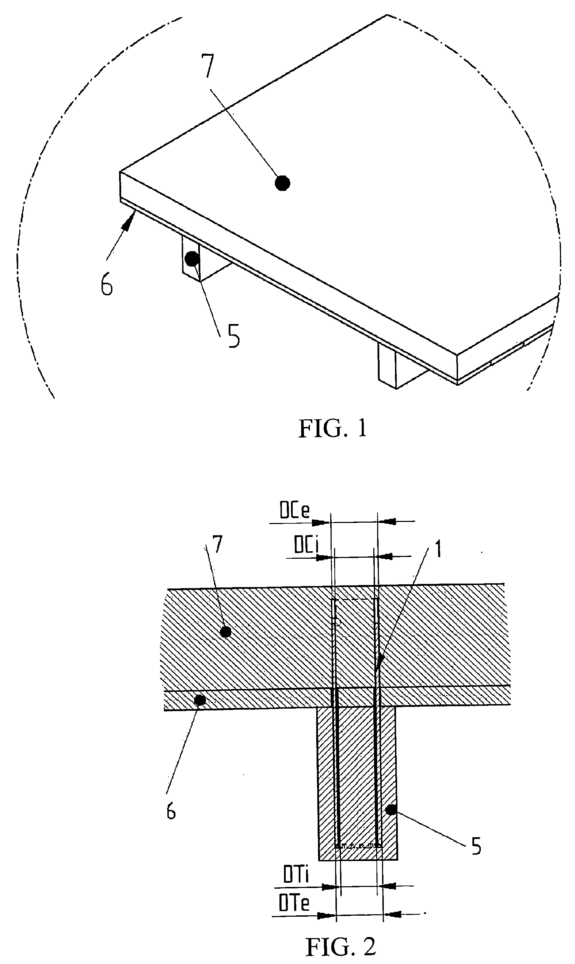

- Figure 1: axonometric view of the beam and concrete slab assembly;
- Figure 2: front view of the connection;

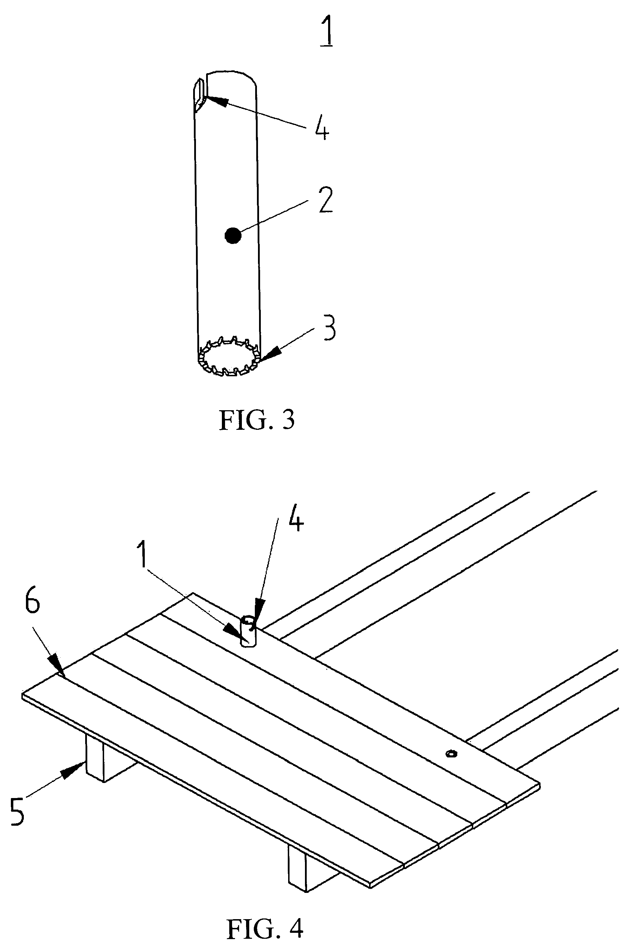

- Figure 3: axonometric view of a tubular connector equipped with cutting edge and fixing edge;

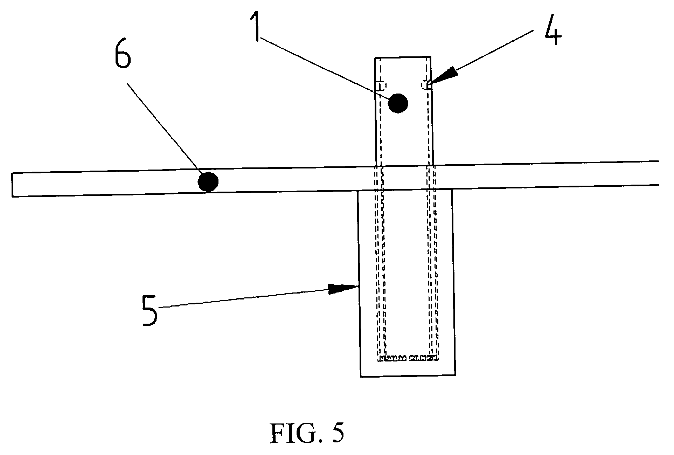

- Figures 4 and 5: axonometric and front views of the tubular connector inserted in the wooden element before casting the concrete slab.

A tubular connector 1 is a cylinder 2 equipped at one end with a suitably "saw set" of cutting toothed crown 3,and equipped on the opposite end with special slots 4 for fixing the connector to the spindle of a screwing device or drill.

The cutting toothed crown 3 presents a suitably "saw set" in order to facilitate the connector penetration into the wood. The "saw set" is obtained in a radial direction (not shown) projecting outwards and/or inwards, according to "saw set" requirements for a cutting tool, known in the wood working field. Shaping of toothed crown and "saw set" 3 allow removing the cut material and, at the same time, guarantee the complete contact of the external connector surface to the wood. The connection has only a small tolerance between the internal connector surface and the wooden cylinder. Such tolerance however does not modify the static behavior of the connection, which behaves like a calibrated connection.

The tubular connector 1 transfers the shear flow between the wooden beam (or rafters) 5 and of the cooperating concrete slab 7.
Construction and functioning of the connection:
a) the tubular connector 1 having an external diameter DCe and an internal diameter DCi is inserted in the wooden beam. In this phase, the operator connects the tubular connector 1 to the spindle of a drill (or screwing device) (not shown) by means of the special slot 4 at the connector head. The tubular connector, operating as a cutting tool (disposable saw hole tool), carves a circular ring-type seat with external diameter (DTe≥DCe) and internal diameter (DTi≤DCi). In this step, the carved material (wood) is removed through the two trace hollow spaces (DCi-DTi) and (DTe-DCe), respectively adjacent to the internal and external side walls of the cylinder 2. "Saw set" only depends on the wooden chip size that must outflow through the two hollow spaces.
b) the tubular connector 1 reaches the seat inside the beam 5. At the end of this step, the operator separates the cylindrical connector 1 from the drill spindle. The connector 1 projects out of the wooden structural elements 5 and 6.
c) casting of the cooperating concrete slab 7 is then carried out. In this step, the projecting length of the connector 1 is covered.

The present invention meets the foreseen objects, since this is a connection which:
- guarantees the cooperation between concrete slab and wooden beam (or rafters), by efficiently transferring the shear flow along the wood-concrete interface;
- unlike the use of traditional saw hole tools, using the same connector as disposable saw hole tools, this solution allows overcoming the limit to the cutting depth. In the proposed system, the drilling operation therefore allows the simultaneous set in place of the connector, with the consequent reduction of the necessary operations for the connector set in place.
- can be directly inserted into the wood, without any pre-hole;
- is dry installed without needing to use any sealing resin. In fact, the volumes of the two trace hollow spaces (DCi-DTi) and (DTe-DCe) have a radial encumbrance reduced to few tenths of millimeter sufficient to allow removing the grinded material during cutting operations and keeping the connector 1 inserted in its own seat at the end of the work.

The use of the new connector allows greatly reducing the set in place time; as a drawback however, greater connector production engagement is required. The connectors are produced with suitable manufacturing technologies. Toothed crown must be suitably "saw set" to allow the wood chip to outflow when the connector advances into the beam. "Saw set" can be obtained by beating a suitable shaped tool. Such methodology allows greatly reducing the placing time, which significantly affects the cost of composite floors.

The main advantages of the use of this type of connector are: an easy product industrialization, a low production cost, a simple installation (that does not require any specialized manpower); furthermore, given the large connection stiffness, the connection of the concrete slab to the wooden beam can be obtained without removing the wooden plank , thus maintaining the original appearance of the floor intrados.

## Claims

1. Tubular connector (1) connectable to structural elements (5, 7), said structural elements (5, 7) being respectively a wooden beam (5) and a concrete slab (7) mutually cooperating by transferring a shearing flow at an interface between the two elements (5, 7), said tubular connector (1) being made integral with one (5) of the structural elements (5, 7) by means of a tubular slot without using resins or other adhesives, **characterised in that** said tubular connector (1) is made of steel and is delimited at its base by a cutting toothed crown for operating as a cutting tool for carving a circular ring-type seat and on the head by a fastening slot for fixing the connector to the spindle of an electrical screw driver or a drill.

2. Tubular connector (1) according to claim 1, **characterised in that** it comprises a cylinder (2) equipped with a cutting, saw-set toothed crown (3) projecting outwards and or inwards in a radial direction.

## Patentansprüche

1. Rohrverbinder (1), der mit strukturellen Elementen (5, 7) verbunden werden kann, die genannten strukturellen Elemente (5, 7) sind jeweils ein Holzbalken (5) und eine Zementplatte (7), die miteinander zusammenarbeiten und einen Schnittfluss an eine Schnittstelle zwischen den beiden Elementen (5, 7) übertragen, der genannte Rohrverbinder (1) wird fest durch einen rohrförmigen Hohlraum ohne Verwendung von Harzen oder sonstigen Adhäsiven an einem (5) der strukturellen Elemente befestigt und ist **dadurch gekennzeichnet, dass** der genannte Rohrverbinder (1) aus Stahl hergestellt und an der Basis durch einen Schneidzahnkranz für den Betrieb als Schnittwerkzeug abgegrenzt wurde, um eine runde ringförmige Aufnahme zu erhalten, und am Kopf mit einer Befestigungskerbe versehen wurde, um den Verbinder an der Spindel eines Elektroschraubers oder Bohrers zu befestigen.

2. Rohrverbinder (1) gemäß Patentanspruch 1, der **dadurch gekennzeichnet ist, dass** er einen Zylinder (2) einschließt, der mit einer Sägezahn-Schneidverzahnung (3) versehen ist, die nach außen und/oder innen in radialer Richtung hervorragt.

## Revendications

1. Connecteur tubulaire (1) pouvant être relié à des éléments structurels (5, 7) ; ces éléments structurels (5, 7) sont respectivement une poutre en bois (5) et une plaque en béton (7) qui coopèrent réciproquement en transférant un flux de coupe à une interface entre les deux éléments (5, 7) ; le connecteur tubulaire (1) est solidaire de l'un (5) des éléments structurels (5, 7) à travers une cavité tubulaire sans l'utilisation de résines ou d'autres adhésifs, **caractérisé en ce que** le connecteur tubulaire (1) est en acier et qu'il est délimité à sa base par une couronne dentée de coupe opérationnelle comme outil de coupe pour obtenir un logement circulaire de type annulaire et, sur la tête, par une fente de fixation pour fixer le connecteur à la broche d'une visseuse électrique ou d'une perceuse.

2. Connecteur tubulaire (1) selon la revendication 1, **caractérisé en ce qu'**il comprend un cylindre (2) pourvu d'une dentelure de coupe à scie (3) en saillie vers l'extérieur et/ou l'intérieur dans une direction radiale.
